# EUROPÄISCHE PATENTSCHRIFT

(11) **EP 2 183 194 B1**
(45) Veröffentlichungstag und Bekanntmachung des Hinweises auf die Patenterteilung: **26.10.2016**
(21) Anmeldenummer: 08784793.5
(22) Anmeldetag: 16.07.2008
(51) Int. Cl.: C04B 7/345

(54) **EINPHASIGES HYDRAULISCHES BINDEMITTEL, HERSTELLUNGSVERFAHREN UND DAMIT HERGESTELLTER BAUSTOFF**
SINGLE-PHASE HYDRAULIC BINDER, METHODS FOR THE PRODUCTION THEREOF AND STRUCTURAL MATERIAL PRODUCED THEREWITH
LIANT HYDRAULIQUE MONOPHASIQUE, PROCÉDÉS DE PRODUCTION ET MATÉRIAU DE CONSTRUCTION FABRIQUÉ AVEC CE LIANT

(30) Priorität: 27.07.2007 DE 102007035259
(43) Veröffentlichungstag der Anmeldung: 12.05.2010
(73) Patentinhaber: Karlsruher Institut für Technologie, 76131 Karlsruhe (DE)
(72) Erfinder: BEUCHLE, Günter, 76185 Karlsruhe (DE); STEMMERMANN, Peter, 76149 Karlsruhe (DE); SCHWEIKE, Uwe, 76185 Karlsruhe (DE); GARBEV, Krassimir, 76344 Eggenstein-Leopoldshafen (DE)
(74) Vertreter: FDST Patentanwälte
(86) Internationale Anmeldenummer: PCT/EP2008/005785
(87) Internationale Veröffentlichungsnummer: WO 2009/015770

(56) Entgegenhaltungen:
- EP-A- 0 470 948
- WO-A-91/06513
- WO-A-2007/017142
- US-A- 5 804 175
- US-A1- 2004 089 203
- GUOKUANG SUN, ADRIAN R. BROUGH & J. FRANCIS YOUNG: "29Si NMR Study of the Hydration of Ca3SiO5 and beta-Ca2SiO4 in the Presence of Silica Fume" JOURNAL OF THE AMERICAN CERAMIC SOCIETY, Bd. 82, Nr. 11, 1999, Seiten 3225-3230, XP002501597
- KRASSIMIR GARBEV & PETER STEMMERMANN: "Structural Features of C-S-H(I) and Its Carbonation in Air-A Raman Spectroscopic Study. Part I: Fresh Phases" JOURNAL OF THE AMERICAN CERAMIC SOCIETY, Bd. 90, Nr. 3, März 2007 (2007-03), Seiten 900-907, XP002501598
- G. K. SUN, J. FRANCIS YOUNG & R. JAMES KIRKPATRICK: "Silicon Substitution for Aluminium in Calcium Silicate Hydrates" JOURNAL OF THE AMERICAN CERAMIC SOCIETY, Bd. 82, Nr. 5, 1999, Seiten 1307-1322, XP002501599
- FRIEDRICH WILHELM LOCHER: "Cement: Principles of Production and Use" 2006, VERLAG BAU + TECHNIK GMBH , DÜSSELDORF,DE , XP002501672 Seite 354 - Seite 356; Abbildung 8.32

## Beschreibung

Die Erfindung betrifft ein einphasiges hydraulisches Bindemittel, ein Gemisch, das ein derartiges Bindemittel enthält, Verfahren zur Herstellung des Bindemittels und des Gemischs sowie einen Baustoff, der mit dem Bindemittel oder dem Gemisch hergestellt wurde.

Die hydraulische Reaktivität beschreibt die Reaktion eines Bindemittels mit Wasser unter Ausbildung eines festen Materials. Die Definition dieses Vorgangs erfolgt in Anlehnung an die bislang bekannten hydraulischen Bindemittel wie z.B. Portlandzement. Nach Härig, Günther, in Klausen, Technologie der Baustoffe, C.F. Müller Verlag, Heidelberg, 1996, S. 53, erhärten hydraulische Bindemittel nach Wasserzugabe sowohl an Luft als auch unter Wasser. Nach H.F.W. Taylor, The chemistry of cements, Academic Press, London 1964, S. 2f, ist *Zement* ein *hydraulisches Bindemittel,* das, mit Wasser zu einer Paste (*Zementleim)* angerührt, in Folge von chemischen Reaktionen zwischen dem Wasser und den im Zement vorhandenen Verbindungen selbständig ansteift und zu *Zementstein* aushärtet. Das Ansteifen und Aushärten hängen dabei weder von einer Trocknung noch von Reaktionen mit dem CO₂ aus der Luft ab. Die Reaktion läuft daher sowohl an Luft als auch unter Wasser ab.

Weiterhin sind latenthydraulische (sog. puzzolanische) Bindemittel bekannt. Nach Härig (s.o.) erhärten diese nach Wasserzugabe nur bei Anwesenheit eines Anregers. Zum Start der Abbindereaktion wird dann z.B. Kalkhydrat oder Portlandzement hinzu gegeben; es findet jedoch keine selbständige Reaktion statt.

Bisher bekannte hydraulische Bindemittel auf Silikatbasis enthalten kein molekulares Wasser, ihre hydraulischen Komponenten enthalten in ihrer Summenformel keinen an Sauerstoff gebundenen Wasserstoff und die hydraulischen Komponenten bestehen überwiegend aus kristallinen (Erd-)Alkalisilikaten. Die Silikatanionen der hydraulisch aktiven Phasen liegen nach H.F.W. Taylor, The chemistry of cements, Academic Press, London 1964, S. 2f. in Form einzelner isolierter oder *monome*rer Silikat-Tetreaeder vor (Q⁰). Ausnahme ist die seltene Phase Belinit, die ein Ringsilikat ist und Chlor enthält. In Belinit ist jedes Silikattetraeder über gemeinsame Sauerstoffe mit zwei weiteren Silikattetraedern verbunden (Q²). Alle bisher bekannten hydraulischen Bindemittel auf Silikatbasis besitzen ein molares Verhältnis CaO:SiO₂ von mindestens zwei.

Derartige hydraulische Bindemittel werden rein oder vermischt mit anderen Stoffen als *Zement* vielfältig zur Herstellung von festen Baustoffen wie Beton, Mörtel oder in Spezialbindern, eingesetzt. Technische Bedeutung besitzen darüber hinaus zwei weitere Typen von meist höher kondensierten silikatischen und amorphen (aber nicht hydraulischen) Bindemitteln, nämlich einerseits Wassergläser und andererseits latent hydraulische bzw. pozzulanische Materialien wie Hochofenschlacken, Flugaschen usw.
*1. Zement* wird durch gemeinsames Brennen von Calciumkarbonat und einem Silikatträger bei ca. 1450 °C zu einem Produkt hergestellt, das als *(Zement-)Klinker* bezeichnet wird und im Wesentlichen aus den hydraulisch reaktiven Klinkerphasen Tricalciumsilikat (Alit, Ca₃SiO₅), Dicalciumsilikat (Belit, vor allem ß-Ca₂SiO₄) und untergeordnet Tricalciumaluminat Ca₃Al₂O₆ und Calciumaluminatferrit Ca₄(Al,Fe)₄O₁₀ besteht. Durch Mahlen und Zusetzen weiterer Stoffe, vor allem von Gips oder Anhydrit als Reaktionsverzögerer, wird so genannter *Portlandzement* (CEM I) erhalten. CEM I wird oft mit latent hydraulischen Silikaten zu den Zementtypen CEM II bis CEM V vermischt. Durch das Mahlen wird eine höhere Oberfläche erzeugt, was die Geschwindigkeit der hydraulischen Reaktion beschleunigt. Nach DIN 1164 besteht Portlandzement aus 61% bis 69% Calciumoxid CaO, 18% bis 24% Siliziumdioxid SiO₂, 4% bis 8% Aluminiumoxid Al₂O₃ und 1% bis 4% Eisenoxid Fe₂O₃.
2. Weiterhin werden so genannte Wassergläser hergestellt. Hierbei handelt es sich um feste, aber wasserlösliche Gläser aus Alkalioxiden und SiO₂, die bei ca. 1400 °C erschmolzen werden. Wassergläser werden als konzentrierte, stark alkalische Lösungen oder Pulver eingesetzt.
3. Darüber hinaus lassen sich silikatische Ausgangsstoffe durch Reaktion mit einer Lauge zu einem Bindemittel umsetzen, wobei Alkalihydroxide als Laugen dienen. Das entstehende Produkt wird meist als Geopolymer bezeichnet, besitzt jedoch nur eine geringe wirtschaftliche Bedeutung.

Die Typen 2 und 3, Wassergläser und Geopolymere, sind nur bedingt als hydraulische Bindemittel im Sinne der eingangs aufgeführten Definition zu sehen, da sie entweder schon als Lösung, also nicht fest, vorliegen bzw. wegen ihrer hohen Wasserlöslichkeit unter Wasser nicht erhärten (Alkalisilikate) oder als Feststoffe nicht reaktiv sind und zum Anstoß der hydraulischen Reaktion Zusätze wie CEM I oder Lauge benötigen. Sie erfordern zu ihrer Herstellung sowohl besondere Ausgangsmaterialien als auch jeweils mehrere aufwändige Verfahrensschritte, wodurch ihre Herstellung teuer ist. Gleichzeitig ist ihre Verträglichkeit mit verschiedenen Zusätzen aufgrund des sehr hohen pH-Wertes äußerst eingeschränkt und die meist sehr langsame Reaktionsgeschwindigkeit kann nicht wirksam beeinflusst, insbesondere nicht beschleunigt werden. Wegen der eingeschränkten Verarbeitbarkeit (langsame Erhärtung, stark alkalische Reaktion) und der geringen Festigkeit ist ihr Anwendungsspektrum daher begrenzt.

Das bekannteste und am häufigsten eingesetzte hydraulische Bindemittel ist Zement, insbesondere Portlandzement. Der für die Herstellung des Vorprodukts Zementklinker bei Temperaturen bis zu ca. 1450 °C notwendige Brennprozess ist nach H.F.W.Taylor, Cement chemistry, Academic Press, London 1990, S. 64f. mit einer theoretischen Reaktionsenthalpie von + 1761 kJ pro kg Zementklinker besonders energieintensiv. Der Löwenanteil des Energiebedarfs entfällt auf die Entsäuerung (oder Dekarbonatisierung) von Calciumkarbonat, das aus Kalkstein, Kalkmergeln oder anderen kalkhaltigen Materialien stammt. Die unter Freisetzung von CO₂ verlaufende Reaktion trägt mit einer Reaktionsenthalpie von + 2138 kJ pro kg Zementklinker stark endotherm zur Gesamtreaktion bei.

Zur Herstellung von 1 kg Portlandzement sind etwa 1,2 kg Kalk erforderlich. Zusätzlich ist zur Bildung der hydraulisch aktiven Klinkerphasen Alit, Belit, Tricalciumaluminat und Calciumaluminatferrit die teilweise Aufschmelzung der Ausgangsmaterialien nötig. Für das Endprodukt Portlandzement ergibt sich als Summe des theoretischen Energiebedarfs, der Wärmeverluste, der Mahlenergie etc. ein tatsächlicher Gesamtenergieaufwand von ca. + 4300 kJ pro kg.

Bei der Herstellung von Portlandzement werden aus den calciumcarbonathaltigen Ausgangsmaterialien erhebliche Mengen an CO₂, freigesetzt, die in Summe etwa 850 g CO₂ pro kg Klinker betragen.

Die Reaktion von Portlandzement mit Wasser führt zur Verfestigung (Aushärtung). Hierbei entstehen nach H.F.W.Taylor, Cement chemistry, Academic Press, London 1990, S. 218, C-S-H-Gele, d.h. schlecht kristalline Calcium-Silikat-Hydrate, sowie Calcium-Aluminat-Hydrate und Portlandit Ca(OH)₂. Letzterer ist eine notwendige Folge der Abbindereaktion und tritt mit einem Anteil von ca. 20 Gew.% im abgebundenen, d.h. ausgehärteten Zementstein auf.

Der Gesamt-Calcium-Gehalt in Portlandzement allgemein und besonders im Vorprodukt Klinker kann nicht wesentlich erniedrigt werden, da sonst die hydraulische Reaktivität stark zurückgeht. Der Gesamt-Calcium-Gehalt liegt, als molares Ca:Si-Verhältnis ausgedrückt, das im Übrigen mit dem molaren (CaO):(SiO₂)-Verhältnis identisch ist, stets bei 3,0 +/- 0,2. Die in Zementstein aus Portlandzement vorliegende Bindemittelmatrix aus C-S-H-Gel, die im wesentlichen aus der Reaktion von Tricalciumsilikat Ca₃SiO₅ stammt, besitzt ein molares Ca:Si-Verhältnis von 1,7 bis 1,8. Das überschüssige CaO liegt nach der Hydratation als Portlandit Ca(OH)₂ vor.

Portlandit trägt nur unwesentlich zur mechanischen Stabilität des Baustoffs bei. Vielmehr bestimmt Portlandit in der Nutzungsphase des Zements den pH-Wert des Baustoffes, der dann bei etwa pH 12,5 liegt. Säureangriffe werden zunächst durch Portlandit gepuffert; ist dieser jedoch aufgebraucht, indem er z.B. durch CO₂ in CaCO₃ umgewandelt ist, sinkt der pH-Wert und die Bindemittelmatrix aus C-S-H-Gel wird angegriffen und zersetzt.

Eine Hemmung der Reaktion kann durch ein möglichst dichtes Gefüge und damit eine geringe Stofftransportgeschwindigkeit erreicht werden. Die Lösung von Portlandit selbst generiert jedoch neue Angriffsmöglichkeiten. Die Pufferung des pH-Wertes in Zement durch Portlandit stellt somit einen eingeschränkten Korrosionsschutz für Baustahl dar. Die durch Portlandit generierte hohe Alkalität verhindert dagegen den Einsatz von Basen- oder Alkali-empfindlichen Zusätzen in zementgebundenen Baustoffen, wie z.B. organischen Fasern. Für den Korrosionsschutz wäre ein pH-Wert von über 9,5 ausreichend.

Portlandzement zeigt beim Abbinden eine hohe Reaktionsenthalpie, die im Wesentlichen aus der Bildung von Portlandit stammt, und zu Wärmestaus in großen, massigen oder voluminösen Bauteilen führt. Die Wärmeentwicklung pro Zeiteinheit kann durch Verlangsamung des Reaktionsumsatzes mittels Kornvergrößerung, Zusatzmittel oder Verdünnung mit Flugaschen vermindert werden. Dies bremst allerdings auch die Festigkeitsentwicklung.

Die Festigkeit von Zementstein wird durch die Hauptkomponente C-S-H-Gel bestimmt, die nur etwa 50 Gew.% ausmacht. Daher beträgt der effektive Energieaufwand zur Herstellung der festigkeitsbestimmenden Bestandteile von Zementstein aus Portlandzement ca. 8600 kJ pro kg. Die andere Hälfte des Zementsteins, im wesentlichen Calciumaluminathydrate und Portlandit, trägt zur Festigkeit des Werk- oder Baustoffs kaum bei und ist, bezogen auf die Festigkeit, ein unerwünschtes Nebenprodukt. Die Portlanditmenge kann in technischen Systemen nachträglich durch die Beimischung von Mikrosilica oder latent hydraulischen Stoffen reduziert werden. Überschüssiger Portlandit reagiert dann langsam unter Verbrauch von Microsilica zu zusätzlichen Calcium-Silikat-Hydraten weiter. Dieser Prozess ist allerdings aufwändig und teuer.

C-S-H-Gele können darüber hinaus Calcium in variablen Mengen einbauen. Mit zunehmendem Calciumgehalt sinkt der Vernetzungsgrad der zugehörigen Silikat-Baueinheiten und damit ihr Beitrag zur Festigkeit des Baustoffes sowie ihre chemische Beständigkeit. In abgebundenem Portlandzementstein liegen die C-S-H-Gele mit einem molaren Ca:Si-Verhältnis von 1,7 bis 1,8 vor. Calcium-Silikat-Hydrate existieren dagegen in einem Bereich des molaren Ca : Si-Verhältnisses von 0,5 bis 3,0. Dies wird durch natürlich vorkommende oder synthetisch hergestellte Feststoffe belegt.

Aus den genannten Gründen wäre es daher sinnvoll, in einem ausgehärteten, hydraulischen Bindemittel im Allgemeinen und in Zementstein aus Portlandzement im Besonderen C-S-H-Gele mit niedrigem Calciumgehalt anzustreben. Allerdings führt bereits eine geringe Reduktion des Calciumgehalts bei der Produktion von Portlandzementklinker im Drehrohrofen zu reaktionsträgen Calciumsilikaten, insbesondere zu einer Erhöhung des Gehalts an Belit. Eine weitere Senkung des Calciumgehalts führt zu hydraulisch inaktiven Produkten wie Wollastonit ß-CaSiO₃, Pseudowollastonit α-CaSiO₃ oder Rankinit Ca₃Si₂O₇. Auf diese Weise, also auf einer "Klinkerroute", sind calciumarme hydraulische Bindemittel nicht zu erhalten.

Im System CaO-SiO₂-H₂O gibt es reine Calcium-Silikat-Hydrate mit molaren Ca:Si-Verhältnissen kleiner als 2,0 und insbesondere kleiner oder gleich 1,0. Es sind sowohl natürlich vorkommende Mineralien, z.B. 11 Ǻ Tobermorit, 14 Ǻ Tobermorit, Xonotlit, α-C₂SH, oder Suolunit [nach Young-Hwei Huang, Suolunite, a new mineral, American Mineralogist 53 (1968), S. 349], als auch Syntheseprodukte bekannt. Diese Verbindungen besitzen aufgrund ihres molaren Ca:Si-Verhältnisses einen Silikat-Vernetzungsgrad zwischen Q⁰ und Q³ und enthalten in einzelnen Fällen Silanol-Gruppen, jedoch ist von keiner dieser Phasen eine hydraulische Reaktivität oder ein latent hydraulisches Verhalten bekannt.

In G. Sun, A. R. Brough, J. F. Young, 29Si NMR Study of the Hydration of Ca3SiO5 and β-Ca2SiO4 in the Presence of Silica Fume, J. Am. Ceram. Soc., 82 (11), 3225-3230 (1999*)* wird die Hydratation von Mischungen aus Ca₃SiO₅ und β-Ca₂SiO₄ mit verschiedenen Anteilen an Quarzstaub ("Silica Fume") untersucht. Die Ausgangsstoffe werden vermischt. In den Mischungen resultieren durch die verschiedenen Anteile an Quarz unterschiedliche Verhältnisse der Vernetzungsgrade Q₀ (C₂S und C₃S) und Q₄ (Quarz). Die Ausgangsmischungen sind wasserfrei. Die Mischungen werden unter Methanol vermahlen und anschließend bei 60°C getrocknet. Die getrocknete Masse wird anschließend pulverisiert. Die resultierenden Mischungen werden mit deionisiertem Wasser versetzt und die Hydratation bei 21°C beobachtet. Dazu werden Proben mit verschiedenen Hydratisierungsgraden entnommen, gemahlen und mittels ²⁹NMR-Spektroskopie untersucht. Dabei wird insbesondere das Auftauchen einer Spezies mit einem Vernetzungsgrad von Q³ beobachtet, welche einer Dreierkette von Silikat-Einheiten im entstandenen Calcium-Silikat-Hydrat (C-S-H) zugeordnet wird.

In K. Garbev, P. Steemmermann, L. Black, C. Breen, J. Yarwood, B. Gasharaova, Structural Features of C-S-H(I) and Its Carbonation in Air - A Raman Spectroscopic Study. Part I: Fresh Phaes, J. Am. Ceram. Soc., 90 (3), 900 - 907 (2007) werden mechanochemisch präparierte Calcium-Silikat-Hydrate vom Typ C-S-H(I) mittels Raman-Spektroskopie untersucht. Es werden dazu nanokristalline C-S-H(I)-Phasen unter Stickstoff mechanochemisch aus stöchiometrischen Mischungen von CaO und SiO₂ (Aerosil) hergestellt. Die Oxide werden unter Zugabe von destilliertem Wasser in einer Kugelmühle für 36 h vermahlen. Anschließend werden die Aufschlämmungen bei 60°C für 120 h getrocknet. Proben mit verschiedenen C/S-Verhältnissen werden untersucht. Die C-S-H(I) Phasen sind nicht hydraulisch aktiv.

Darüber hinaus gibt es Verbindungen, in denen Teile der Calciumionen substituiert werden: M^{(+II)}HₓM^{(+I)}₍₂₋ₓ₎ [SiO₄], wobei M^{(+II)} = Erdalkalien und M^{(+I)} = Alkalien darstellen und x von 0 bis 2 variieren kann. Auch hier treten ähnliche molare Ca:Si-Verhältnisse und damit ähnliche Vernetzungsgrade wie bei den oben genannten reinen Calcium-Silikat-Hydraten und wiederum in einzelnen Fällen Silanol-Gruppen auf Auch von keiner dieser Phasen ist eine hydraulische Reaktivität oder ein latent hydraulisches verhalten bekannt.

Die DE 10 2005 037 771 A1 offenbart ein Verfahren zur Herstellung von Belit-Bindemittel, bei dem ein Ausgangsmaterial, das Calciumoxid und Siliziumdioxid im molaren Ca:Si-Verhaltnis zwischen 2,5:1 und 1,5:1 aufweist, mit Kristallisationskeimen aus α-Dicalcium-Silikat-Hydrat, α-C₂SH, versetzt wird. Das so modifizierte Ausgangsmaterial wird dann bei einer Temperatur zwischen 100 und 300°C hydrothermal behandelt, wodurch sich dieses überwiegend in das Zwischenprodukt α-C₂SH umwandelt. Nach dem Trocknen des Zwischenprodukts bei einer Temperatur zwischen 500 °C und 1000 °C und anschließendem Abkühlen scheidet sich das gewünschte Belit-Bindemittel ab.

Die WO 2007/017142 A2 offenbart ein Verfahren zur Herstellung von Belit-Bindemittel. Belit enthält keinen an Sauerstoff gebundenen Wasserstoff und besitzt einen Vernetzungsgrad von Q°.

Aus der DE 22 22 545 B2 ist ein Verfahren zur Herstellung eines Calciumsilikats des Xonotlit-Typs bekannt, das an Sauerstoff gebundenen Wasserstoff enthält, wobei der Xonotlit kristallin ist. Das in diesem Patent beschriebene amorphe Vorprodukt ist, bedingt durch die hydrothermal Herstellung, ein nicht hydraulisch erhärtendes Hydrat.

Die EP 0 500 840 B1 offenbart Tektoalumosilikat-zement sowie ein zurgehöriges Herstellungsverfahren, wobei das Tektoalumosilikat einen Vernetzungsgrad von Q⁴ aufweist. Die hydraulische Erhärtung von entsprechenden Verbindungen basiert zudem nicht auf der Bildung von C-S-H-Phasen.

Gemäß der DE 195 48 645 A1, die ein Verfahren zur Herstellung von Sekundärrohstoffen aus Abbruchmaterial beschreibt, wird Betonabbruch durch Mahlen aktiviert. Es wird jedoch derart gemahlen, dass kein hydraulisch reaktives Produkt entsteht, sondern ein Produkt, das als Zementrohmehlkomponente verwendet werden kann. Durch die Verwendung von Betonabbruch ist in der Ausgangskomponente zudem ein Sulfatträger enthalten, der als Reaktionsprodukt die Herstellung eines einphasigen Produktes verhindern dürfte.

Ausgehend hiervon ist es die Aufgabe der vorliegenden Erfindung, ein einphasiges hydraulisches Bindemittel, ein Gemisch, das ein derartges Bindemittel enthält, Verfahren zur Herstellung des Baustoffs und des Gemischs sowie einen Baustoff, der mit dem Bindemittel oder dem Gemisch hergestellt wurde, vorzuschlagen, die die vorher genannten Nachteile und Einschränkungen nicht aufweisen.

Insbesondere soll ein einphasiges hydraulisches Bindemittel auf Silikatbasis und ein dieses Bindemittel enthaltendes Gemisch bereitgestellt werden, das im Vergleich zu herkömmlichem Portlandzement bzw. zu hydraulischen oder latent hydraulischen Bindemitteln
- den Energieverbrauch bei der Bindemittelherstellung verringert, d.h. das bei niedrigen Temperaturen hergestellt wird,
- die Höhe der CO₂-Emissionen senkt,
- eine geringere gesamte oder gleichmäßigere Wärmefreisetzung bei der Hydratation zeigt und
- eine höhere Beständigkeit und Festigkeit der mit diesem Bindemittel hergestellten Bau- bzw. Werkstoffe erzielt.

Diese Aufgabe wird im Hinblick auf das einphasige hydraulische Bindemittel durch die Merkmale des Anspruchs 1, im Hinblick auf das Gemisch durch das Merkmal des Anspruchs 4, im Hinblick auf die Herstellungsverfahren durch die Merkmale des Anspruchs 6 oder 7 und im Hinblick den Baustoff durch die Merkmale des Anspruchs 12 gelöst. Die Unteransprüche beschreiben jeweils vorteilhafte Ausgestaltungen der Erfindung.

Das erfindungsgemäße hydraulische Bindemittel ist eine hydraulische aktive silikatische Verbindung, die Calcium, Silizium, Sauerstoff und Wasserstoff enthält. Weitere Elemente können ebenfalls Bestandteil des Bindemittels sein und werden nach der Art ihres Einbaus unterschieden: Alkalien, insbesondere Natrium; Erdalkalien, insbesondere Magnesium, oder andere zweiwertige Kationen, insbesondere Fe[+II] und Mangan; dreiwertige Kationen, insbesondere Al[+III], werden, als M[6]^{x+} sechsfach oder höher mit Sauerstoff koordiniert, eingebaut, wobei die M[6]^{x+} das Calcium teilweise ersetzen. Tetraedrisch durch Sauerstoff koordinierte Elemente, insbesondere Phosphor, Aluminium oder Fe³⁺ bilden Sauerstoffanionen und werden als Phosphat, Aluminat oder Ferrat auf tetraedrischen Positionen als M[4]^{y+} eingebaut, wobei sie Silizium teilweise ersetzen. Das amphotere Aluminium eignet sich ebenso wie Magnesium für beide Varianten. Die Hochzahlen x+ und y+ geben jeweils die Ladung des betreffenden Kations an.

Die Stöchiometrie des erfindungsgemäßen hydraulischen Bindemittels ist durch ein molares Verhältnis Ca:Si zwischen 0,75 und 2,75; besonders bevorzugt von 1,0 bis 2,0; definiert. Im Falle, dass ein Teil der Calcium- oder Siliziumatome durch die Substituenten M[6]^{x+}O_{x/2} bzw. M[4]^{y+}O_{y/2} ersetzt sind, wird anstelle des einfachen molaren Ca:Si-Verhaltnisses, das identisch ist mit dem molaren (CaO) : (SiO₂) -Verhältnis, das modifizierte molare Verhältnis [CaO + (x/2) · (M[6]^{x+}O_{x/2})] : [SiO₂ + M[4]^{y+}O_{y/2}] angegeben.

Das erfindungsgemäße einphasige hydraulische Bindemittel ist durch einen geringen mittleren Vernetzungsgrad der Silikat-Baueinheiten von Q^{L,S} oder geringer charakterisiert. Dieser Wert gibt das Auftreten von niedermolekularen Silikatbaueinheiten, d.h. von Monomeren bis Trimeren (z.B. Dimere in Suolunit oder Trimere in Rosenhahnit) an, wobei monomere Silikatbaueinheiten, die auch als Inselsilikate oder als Q⁰-Einheiten bezeichnet werden, besonders bevorzugt sind. Ein weiteres Charakteristikum für das erfindungsgemäße einphasige hydraulische Bindemittel ist die Ausbildung von Silanol-Gruppen, die schwache Wasserstoff-Brücken ausbilden können.

Die Silikatbaueinheiten werden nach Trimethylsilylierung gaschromatographisch bestimmt. Das erfindungsgemäße einphasige hydraulische Bindemittel ist röntgenamorph.

Die vorliegende Erfindung betrifft ein einphasiges hydraulisches Bindemittel, das aus hydraulisch aktivem Calciumsilikat besteht. Im Vergleich zu Portlandzement enthält dieses Bindemittel weniger Calcium bzw. weniger Calcium substituierende Elemente, so dass das molare Verhältnis [CaO + (x/2) · (M[6]^{x+}O_{x/2})]: [SiO₂ + M[4]^{y+}O_{y/2}] geringer ist. Das erfindungsgemäße einphasige hydraulische Bindemittel lässt sich qualitativ aus denselben Ausgangsmaterialien wie Portlandzement herstellen, die jedoch in hiervon verschiedenen Mengen eingesetzt werden. Außerdem erfordert der Herstellungsprozess niedrigere Temperaturen, so dass sich Energieaufwand und Kohlendioxidemissionen verringern.

Die vorliegende Erfindung betrifft weiterhin ein Gemisch, das einen Anteil des erfindungsgemäßen einphasigen hydraulischen Bindemittels umfasst. Der Anteil beträgt vorzugsweise mindestens 10 Gew.%, besonders bevorzugt mindestens 25 Gew.%, insbesondere mindestens 50 Gew.%.

Das Abbinden oder auch das Aushärten findet, wie von Portlandzement bekannt, durch Mischen mit Wasser und gegebenenfalls unter Wasser statt. Durch die Hydratation entsteht ein mechanisch fester Baustoff. Bei der hydraulischen Reaktion des erfindungsgemäßen hydraulischen Bindemittels entsteht kein Portlandit Ca(OH)₂, er ist zu keiner Zeit röntgenographisch nachweisbar. Weiterhin verläuft die Abbindereaktion unter geringerer Wärmefreisetzung als bei der Hydratation von Portlandzement. Die Abbindegeschwindigkeit lässt sich, wie bereits für Portlandzement bekannt, durch die Substitution verschiedener Elemente, die Variation der Verarbeitung (z.B. Mahlen) sowie durch oberflächenaktive Zusätze, wie z.B. organische Zusätze, in einem weiten Bereich einstellen. Das Maximum der Hydratationswärme wird dann nach einem Zeitraum von einigen Minuten oder erst nach mehreren Tagen erreicht.

Beim Abbinden reagiert das erfindungsgemäße silikatische hydraulische Bindemittel zu einem Calcium-Silikat-Hydrat (C-S-H-Phase) mit einem molaren Ca:Si-Verhältnis kleiner als 1,5. Auf molekularer Ebene findet hierbei eine Vernetzung der Silikatbaueinheiten durch Polymerisation, auf makroskopischer Ebene eine Verfestigung statt.

Je nach Zusammensetzung des Ausgangsmaterials enthält das Hydratationsprodukt gegebenenfalls noch weitere Alkalien, Erdalkalien oder andere Elemente, so dass ein Calcium-Silikat-Hydrat mit einem modifizierten molaren Verhältnis [CaO + (x/2) · (M[6]^{x+}O_{x/2})]: [SiO₂ + M[4]^{y+}O_{y/2}] kleiner als 1,5 entsteht. Abgebundener Portlandzement besteht dagegen aus einem C-S-H-Gel *(Zementgel)* mit einem molaren Ca:Si-Verhältnis von 1,7 bis 1,8 und enthält zusätzlich Portlandit Ca(OH)₂.

Der erfindungsgemäß aus der Abbindereaktion entstandene Baustoff ist aufgrund der Abwesenheit von Portlandit und aufgrund des im Vergleich zu Zementstein aus Portlandzement geringeren molaren Ca:Si-Verhältnisses chemisch beständiger als Portlandzementstein. Die gemessene Druckfestigkeit nach 28 Tagen überschreitet 20 N/mm². Dieser Wert liegt in der Größenordnung der europäischen Norm EN 197 für Zemente, die 3 verschiedene Klassen für die Festigkeit von 32,5, 42,5 und 52,5 N/mm² angibt.

Falls das erfindungsgemäße Bindemittel weniger als 1% Na₂O enthält, kann es gemeinsam mit alkaliempfindlichen Zusätzen wie z.B. anorganischen oder organische Fasern mit geringer Alkalibeständigkeit zu einem erfindungsgemäßen Baustoff umgesetzt werden.

Die Herstellung des erfindungsgemäßen silikatischen hydraulischen Bindemittels erfolgt in einem zweistufigen Verfahren.

In einem ersten Schritt (a) wird eine Mischung von festen Ausgangsstoffen mit oder ohne Wasser in ein Calcium-Hydroxo-Silikat umgewandelt. Diese Mischung enthält Calcium, Silizium, Sauerstoff und Wasserstoff. Im Calcium-Hydroxo-Silikat liegt Silizium in Form von niedermolekularen Silikat-Baueinheiten vor, die Silanol-Gruppen aufweisen. Besonders bevorzugt sind niedermolekulare Silikatbaueinheiten, d.h. Monomere, die Silanol-Gruppen tragen. Die Umwandlung erfolgt durch die Zufuhr von mechanischer, thermischer oder chemischer Energie.

Das in Schritt (a) hergestellte Calcium-Hydroxo-Silikat ist durch ein System von Wasserstoffbrückenbindungen stabilisiert. Tabelle 1 zeigt eine Zusammenstellung von bisher bekannten, teilweise Kristallwasser enthaltenden Calcium-Hydroxo-Silikaten, die sich zur Herstellung des erfindungsgemäßen einphasigen hydraulischen Bindemittels eignen.

| **Tabelle 1** | |
|---|---|
| Ca_{1,5} [SiO₃ (OH)] · 0, 5 (Ca (OH) 2) | α-C₂SH |
| Ca_{1,5} [SiO₃ (OH)] · 0, 5CaF | |
| Ca_{1,5} [SiO₃ (OH)] · 0,5 (Mn (OH) 2) | Poldervaarite |
| NaCa [SiO₃ (OH)] | |
| Ca₃[SiO₃(OH)]₂ · 2H₂O | Afwillit |
| Ca₃[SiO₃(OH)]₂ · 2H₂O · CaF₂ | Bulfonteinit |
| MnCaO[(SiO₃(OH)] | Mozartite |
| Ca₃[Si₃O₈(OH)₂] | Rosenhahnite |
| Ca₂[Si₂O₅(OH)₂] -H₂O | Suolunit |

Das erfindungsgemäße einphasige hydraulische Bindemittel entsteht schließlich gemäß Schritt (b) durch Mahlen des Calcium-Hydoxo-Silikats, bevorzugt unter erhöhter Scher- und Druckwirkung, z.B. in einer Scheibenschwingmühle, einer Kugelmühle oder einer Wälzmühle. Durch das Mahlen werden die Wasserstoffbrückenbindungen umorganisiert und zum Teil oder ganz unter Abspaltung von molekularem Wasser zerstört. Die Veränderung der Wasserstoffbrückenbindungen und die Umwandlung in molekulares Wasser lassen sich schwingungsspektroskopisch nachweisen.

Schließlich wird, sofern erforderlich, während Schritt (c) der H₂O-Gehalt (Wassergehalt) des einphasigen hydraulischen Bindemittels auf einen Wert von 3,5 Gew.% bis 20 Gew.% eingestellt. Dazu wird zunächst der in Sauerstoff-Wasserstoff-Bindungen gebundene Anteil des Bindemittels als H₂O-Gehalt bestimmt. Solange der H₂O-Gehalt des Bindemittels über 20 Gew.% liegt, erfolgt die Einstellung durch Trocknen.

Die Herstellung eines Gemischs, das das erfindungsgemäße silikatische hydraulische Bindemittel enthält, erfolgt in Analogie hierzu ebenfalls in einem zweistufigen Verfahren.

In einem ersten Schritt (a') wird eine Mischung aus silikathaltigen Rohstoffen und calciumhaltigen Rohstoffen, die Silizium-, Calcium-, Sauerstoff- und Wasserstoff-Atome enthalten, mit oder ohne Wasser bereitgestellt und in ein Vorprodukt umgewandelt, das teilweise Calcium-Hydroxo-Silikat mit Silanol-Gruppen enthält.

Als calciumhaltige Rohstoffe eignen sich insbesondere CaO, CaCO₃ oder Ca(OH)₂. Als siliziumhaltige Rohstoffe kommen in erster Linie Quarz, Silica, Glimmer, Feldspäte, Gläser oder Schlacken in Frage.

In einer besonderen Ausgestaltung wird für Schritt (a') ein einzelnes Ausgangsmaterial, das bereits alle erforderlichen chemische Elemente enthält oder ggf. durch Zugaben entsprechend eingestellt wird, eingesetzt. Hierfür eignen sich insbesondere Altbetone, die sowohl silikat- als auch calciumhaltige Rohstoffe enthalten.

Hieran anschließend wird gemäß Schritt (b') das Vorprodukt so lange gemahlen, bis sich aus dem Calcium-Hydroxo-Silikat das einphasige hydraulische Bindemittel bildet.

In einer besonderen Ausgestaltung zeigt das erfindungsgemäße hydraulische Bindemittel eine Substitution auf verschiedenen Positionen im Festkörper. Die hieran beteiligten Elemente sind schon im Ausgangsmaterial enthalten oder gelangen durch Beimischungen zum Ausgangsmaterial in den Herstellungsprozess.

Das Bindemittel enthält Silikat-Baueinheiten mit Silanol-Gruppen, die aufgrund der spezifischen Zusammensetzung und der Verarbeitung einerseits in einem lagerfähigen Zustand gehalten werden und andererseits beim Anmachen des Bindemittels mit Wasser hydraulisch reagieren und zu einem Abbinden, d.h. zu einer Verfestigung führen. Die Art und Zusammensetzung der Mischung aus den Ausgangsstoffen bestimmt zusammen mit den Verarbeitungsparametern die genaue Zusammensetzung, Struktur und hydraulische Reaktivität des Bindemittels.

Als synthetische Ausgangsstoffe für Schritt (b) bzw. (b') eignen sich Produkte einer in Schritt (a) bzw. (a') durchgeführten hydrothermalen Synthese oder einer mechanochemischen Synthese, ggf. kombiniert mit einem hydrothermalen Folgeprozess.
- Erfolgt Schritt (a) bzw. (a') *hydrothermal* in einem Druckautoklaven bei 140 °C bis 300 °C, werden calciumhaltige Rohstoffe wie CaO, CaCO₃ oder Ca(OH)₂ und siliziumhaltige Rohstoffe wie Quarz, Silica, Glimmer, Feldspäte, Altbetone, Gläser oder Schlacken sowie ggf. weitere Reaktionspartner durch direkte Reaktion mit Wasser oder Wasserdampf im Druckautoklaven umgesetzt. Die Zugabe einer Lauge, bevorzugt NaOH oder KOH, ist möglich. Die Lauge stellt den pH-Wert zwischen 11 und 13 ein, erhöht die Reaktionsgeschwindigkeit und erlaubt den Einsatz von langsam reagierenden Silizium-Verbindungen als Rohstoff.
- Erfolgt Schritt (a) bzw. (a') durch *mechanochemische* Herstellung, werden calciumhaltige Rohstoffe wie CaO, CaCO₃ oder Ca(OH)₂ und siliziumhaltige Rohstoffe wiederum ggf. unter Zugabe einer Lauge in einer Mühle vermahlen. Bei reaktionsträgen Systemen, wie z.B. bei CaO mit Quarzsand, muss anschließend die oben beschriebene hydrothermale Behandlungsstufe angeschlossen werden.

In einer weiteren Ausgestaltung besteht die Möglichkeit der Herstellung von Komposit-Bindemitteln unter Einsatz von Hochofenschlacke, Flugasche, natürlichen Puzzolanen oder herkömmlichem (Portland-)Zement. Letzteres ist dann besonders interessant, wenn der erfindungsgemäße Zement sehr schnell reagiert (Reaktionssteuerung) oder wenn die Mischung der Ausgangsmaterialien mehr Calcium als erforderlich enthält.

Aus einem erfindungsgemäßen hydraulischen Bindemittel gebildete Hydratationsprodukte enthalten Calcium-Silikat-Hydrate mit einem niedrigem molaren Ca:Si-Verhältnis und sind damit chemisch beständiger als C-S-H-Gele in Portlandzementstein, da kein Portlandit gebildet wird und die Silikat-Baueinheiten einen höheren Vernetzungsgrad im Vergleich zu Portlandzementstein aufweisen. Auch liegt an den Kontaktstellen des Bindemittels zum Zuschlag in Mörteln oder Betonen kein verwitterungsempfindlicher Portlandit vor, so dass sich keine Sollbruchstellen im Verbund von Mörteln und Betonen bilden.

Falls das erfindungsgemäße Bindemittel weniger als 1% Na₂O enthält, ist das daraus gebildete Bindemittelgerüst weniger anfällig für sekundär auftretende Alkali-Kieselsäure-Reaktionen, so dass alkaliempfindliche Zuschläge einsetzbar sind.

Die Erfindung wird im Folgenden anhand von Ausführungsbeispielen näher erläutert.

### Beispiel 1: Calciumhydrogensilikat als Ausgangsstoff

Calciumhydrogensilikat α-C₂SH wurde gemäß DE 10 2005 037 771 A1 aus Ausgangsmaterialien wie Quarz, Sand, Kalkstein, Altbeton, Glas oder Schlacken hydrothermal bei einer Temperatur von 140 °C bis 220 °C mit Kristallisationskeimen und mit bzw. ohne Zugabe von NaOH (pH 11-13) hergestellt. Die Behandlungsdauer lag zwischen 6 Std. und 3 Tagen. Aus dem Vorprodukt α-C₂SH wurde durch Mahlen das hydraulische Bindemittel wie in den folgenden beiden Varianten beschrieben, hergestellt. Dabei wurde das H-Brückensystem zerstört und zum Teil Wasser abgespaltet. Im Unterschied zur DE 10 2005 037 771 A1 erfolgte hier höchstens eine Teilentwässerung; eine vollständige Entwässerung, die zur Umwandlung in eine Ca₂SiO₄-ähnliche Phase führt, ist nicht nötig.

### Beispiel 1.1: Synthese von reinem α-C₂SH und Umwandlung in erfindungsgemäßes hydraulisches Bindemittel durch Mahlung

Die hydrothermale Synthese von α-C₂SH aus den Ausgangsmaterialien Sand, Portlandit, H₂O und NaOH (molares Ca:Si-Verhältnis = 2,0) erfolgte unter Impfen mit Kristallisationskeimen aus α-C₂SH bei 200 °C über 72 Std. mit Waschen in H₂O/Ethanol und anschließendem Trocknen bei 100 °C über 24 Std. Beim Mahlen in einer Scheibenschwingmühle für 60 bis 300 Sekunden wurde das Vorprodukt unter partieller Entwässerung und Umstrukturierung der OH-Gruppen in erfindungsgemäßes Bindemittel umgewandelt.

Dieser Effekt lässt sich mit IR-Spektroskopie nachweisen und verfolgen: Die Linien ν₁ OH (Ca) bei 3540 cm⁻¹ und 5 OH (Si) bei 1270 cm⁻¹ verlieren mit zunehmender Mahldauer an Intensität, während eine breite Absorptionsbande, die im Bereich von 3200 bis 3500 cm⁻¹ entsteht, der ν₁ OH-Schwingung zugeordnet werden kann. Weitere Banden, die ebenfalls auf OH-Schwingungen zurückgehen, und zwar bei 678 cm⁻¹ und 713 cm⁻¹ (beide ν_{L} OH), und bei 747 cm⁻¹ und 754 cm⁻¹ (beide ν₁ Si-O(H)) werden durch den Mahlvorgang beeinflusst. Schließlich verändern sich die beiden für Streckschwingungen von OH-Gruppen in H-Bindungen typischen Banden ν₁ OH(O) bei 2450 cm⁻¹ und 2840 cm⁻¹ als Funktion der Mahldauer. Beide Banden nehmen an Intensität ab, werden asymmetrischer und verschieben sich in Richtung zu höheren Wellenzahlen zu 2470 bzw. 2930 cm⁻¹, was die Entstehung neuer, verlängerter H-Bindungen anzeigt.

Das erfindungsgemäße Bindemittel ist röntgenamorph und erscheint im Röntgen-Pulverdiffraktogramm nur durch einen erhöhten Untergrund im Bereich 0,4 nm bis 0,23 nm von sehr schwachen Reflexen von α-C₂SH überlagert.

Die umstrukturierten OH-Gruppen sind für eine weitere Reaktion mit Wasser frei zugänglich. Diese Reaktion führte bei der hydraulischen Reaktion des Bindemittels zu einer Polykondensation der [SiO₃(OH)]-Einheiten, d.h. zur Bildung von C-S-H-Phasen unter Festigkeitsentwicklung. Bei einem Verhältnis Wasser zu Bindemittel von 0,3 und Zugabe von drei Teilen Sand zu einem Teil Bindemittel wurde nach 28 Tagen eine Druckfestigkeit von 20 N/mm² überschritten.

Die Wärmeentwicklung bei der Hydratation wurde mit einem Wärmeleitungskalorimeter verfolgt. Dazu wurde das Bindemittel durch Zugabe von Wasser (Massenverhältnis Wasser:Bindemittel = 1,0) zur Hydratation gebracht. In den ersten Sekunden nach dem Zudosieren von (Anmach-)Wasser wurde das Freisetzen von Benetzungswärme beobachtet. Nach einer Periode sehr geringer Nettowärmefreisetzung (sog. Ruheperiode) begann der eigentliche Hydratationsprozess. Dabei stieg die Nettowärmefreisetzung zunächst exponentiell, dann degressiv, bis sie nach 12 Stunden ihr Maximum erreichte. In den folgenden 5 bis 10 Stunden sank sie erst progressiv, danach degressiv, bis sie sich schließlich asymptotisch an die Nulllinie annäherte.

Die Bildung von C-S-H Phasen wurde mit Hilfe von Pulver-Röntgenbeugung nachgewiesen: Es zeigten sich eine breite Streuung im Bereich von 2,0 nm bis 1,0 nm (Basalreflex) sowie typische breite Reflexe bei 0,31 nm, bei 0,28 nm und bei 0,18 nm.

### Beispiel 1.2: Herstellung von Al- und Schwefel-substituierten Calcium-Hydroxo-Silikat und Umwandlung in erfindungsgemäßes hydraulisches Bindemittel

Die Ausgangsmaterialien Sand, Portlandit, Al(OH)₃, CaSO₄ · 0,5 H₂O, H₂O, 1M-NaOH (die molaren Verhältnisse betrugen CaO:[SiO₂+Al₂O₃+SO₃] = 2,0; SiO₂: [Al₂O₃+SO₃] = 7; Al₂O₃:SO₃ = 1) wurden mit Kristallisationskeimen aus α-C₂SH versetzt und bei 200 °C für 72 Std. einer hydrothermalen Behandlung unterzogen.

Das hergestellte Calcium-Hydroxo-Silikat besitzt die Zusammensetzung Ca₂ [H Al_{0,08} S_{0,04} Si_{0,88} O₄] (OH), das heißt die Elemente Aluminium und Schwefel sind in die Struktur von α-Dicalciumsilikathydrat Ca₂[HSiO₄](OH) eingebaut. Der Einbau in die Struktur erfolgt auf tetraedrischen Positionen und erniedrigt die Symmetrie von orthorhombisch nach monoklin, was durch Aufspaltung der Reflexe im Pulverdiffraktogramm nachgewiesen wurde. In IR-Spektren an Al- und S-substituierten α-C₂SH-Einkristallen wurde eine Verschiebung der Si-O antisymmetrischen Streckschwingung von 974 cm⁻¹ nach 980 cm⁻¹ festgestellt. Eine weitere Folge der Substitution ist die Änderung der Frequenz der Doppelbande für die γ-OH Schwingungen von 929 cm⁻¹ auf 940 cm⁻¹ bzw. von 955 cm⁻¹ auf 947 cm⁻¹. Weiterhin wurden im Vergleich von reinen mit substituierten α-C₂SH-Phasen Intensitätsunterschiede insbesondere bei den Banden mit H-Beteiligung festgestellt. Auf atomarer Ebene treten Störstellen auf. Die Störstellen äußern sich als Kleinwinkelgrenzen, Verzwillingung und Domänenstrukturen, die mittels TEM (Transmissions-Elektronen-Mikroskopie) bestätigt wurden.

Nach Waschen des Calcium-Hydroxo-Silikats mit H₂O und Ethanol und Trocknen bei 100 °C über 24 Stunden erfolgte das Mahlen in der Scheibenschwingmühle für 60 Sekunden.

Nachdem das auf diese Weise erfindungsgemäß hergestellte Bindemittel mit Wasser versetzt wurde, erfolgte die Hydratation und Festigkeitsentwicklung deutlich schneller als im Beispiel 1.1. Das Maximum der Hydratationswärme war nach 10 Stunden erreicht. Bei einem Massenverhältnis Wasser zu Bindemittel von 0,3 und Zugabe von drei Teilen Sand zu einem Teil Bindemittel wurde nach 28 Tagen eine Druckfestigkeit von 20 N/mm² überschritten. Aluminium und Schwefel im erfindungsgemäß hergestellten Calcium-Hydroxo-Silikat Ca₂[H Al_{0,08}S_{0,04} Si_{0,88} O₄] (OH) erleichtern die Umsetzung zum erfindungsgemäßen Bindemittel und stellen bei der späteren Hydratation des Bindemittels Reaktionszentren dar, die die Geschwindigkeit der Reaktion mit Wasser steuern. Auf diese Weise ist daher eine Beschleunigung des Hydratationsprozesses möglich.

### Beispiel 1.3: Verkürzte hydrothermale Behandlung

Die hydrothermale Synthese eines Vorprodukts aus den Ausgangsmaterialien Sand, Portlandit, H₂O und NaOH (molares Ca:Si-Verhältnis = 2,0) erfolgte unter Zugabe von Kristallisationskeimen aus α-C₂SH bei 190 °C über 6 Std. Der entstandene wässrige Schlamm wurde abfiltriert und anschließend bei 70 °C über 48 Std. getrocknet.

Durch die kurze hydrothermale Behandlung war das Vorprodukt ein inhomogenes Gemisch aus Calcium-Hydroxo-Silikat und weiteren Bestandteilen. Die Hauptbestandteile dieses Gemischs waren α-C₂SH, Jaffeit (Ca₆[Si₂O₇] (OH)₆) und ein amorpher Anteil. Als Nebenbestandteile treten Portlandit, Calcit und Quarz auf.

In einem weiteren Schritt wurde das Vorprodukt mit Sand im Massenverhältnis 1:1 vermischt und in einer Scheibenschwingmühle für 360 Sekunden (erfindungsgemäßes Gemisch 1) bzw. 720 Sekunden (erfindungsgemäßes Gemisch 2) gemahlen.

**Tabelle 2** zeigt die mit quantitativer Rietveldanalyse und innerem Standard bestimmten Bestandteile der zwei erfindungsgemäßen Gemische, die ein amorphes einphasiges hydraulisches Bindemittel enthalten.

| **Tabelle 2** | | |
|---|---|---|
| **Bestandteil** | **erfindungsgemäßes Gemisch 1** | **erfindungsgemäßes Gemisch 2** |
| α-C₂SH | 12,9 Gew.% | 12,0 Gew.% |
| Jaffeit | 13,0 Gew.% | 10,4 Gew.% |
| Portlandit | nicht nachweisbar | nicht nachweisbar |
| Calcit | 0,2 Gew.% | 0,3 Gew.% |
| Quarz | 47,7 Gew.% | 49,0 Gew.% |
| Amorphes, einphasiges hydraulisches Bindemittel | 26,2 Gew.% | 28,3 Gew.% |

Das Calcium-Hydroxo-Silikat wurde nur zum Teil in erfindungsgemäßes Bindemittel umgesetzt. Dieses Phänomen wurde auch mittels IR-Spektroskopie durch eine Verminderung der Intensität der für α-C₂SH typischen Banden belegt.

Der Mahlvorgang bewirkte neben einer Veränderung der Korngrößen vor allem eine Reaktion zwischen den Ausgangsstoffen, durch die das erfindungsgemäße hydraulische Bindemittel entstand. Die BET-Oberfläche des Vorprodukts betrug 30 m²/g und des Quarzes 2 m²/g, während die Mahlprodukte Werte von 6,6 m²/g (erfindungsgemäßes Gemisch 1) und 5,8 m²/g (erfindungsgemäßes Gemisch 2) aufwiesen.

Die erfindungsgemäßen Gemische 1 und 2 reagierten bei Zugabe von Wasser hydraulisch unter Bildung von C-S-H-Phasen und Festigkeitsentwicklung. Die Bildung von C-S-H Phasen wurde mit Hilfe von Pulver-Röntgenbeugung durch das Entstehen einer breiten Streuung im Bereich von 2 nm bis 1 nm (Basalreflex) sowie breiter Reflexe bei 0,31 nm, 0,28 nm und 0,18 nm nachgewiesen. Im IR Spektrum der hydratisierten Produkte wurde ebenfalls die Bildung von C-S-H nachgewiesen.

Untersuchungen mittels Leitungskalorimeter zeigten, dass eine kürzere Mahldauer insgesamt zu einer geringeren Nettowärmefreisetzung führte. Das Maximum der Wärmefreisetzung war deutlich erniedrigt und die Zeit bis zum Erreichen des Maximums verkürzt.

### Beispiel 2: Natrium-Calciumhydrogensilikat als Ausgangsstoff

Als Ausgangsmaterialien dienten Quarzsand (SiO₂), CaCO₃, Wasser und NaOH-Plätzchen (Molares Ca:Si-Verhältnis = 1.0).

Die Ausgangssubstanzen Quarzsand und CaCO₃ wurden gemeinsam oder getrennt vermahlen, um eine gute Durchmischung und geringe Korngrößen (kleiner 25 µm) für die Reaktion zu erreichen. Dann wurden NaOH und Wasser hinzu gegeben und die Gesamtmenge bei 220 °C in stahlummantelten Teflon-Autoklaven für 87 Std. hydrothermal behandelt. Nach dieser hydrothermalen Behandlung wurde filtriert, das Produkt von der Lösung abgetrennt und NaOH zurück gewonnen. Danach wurde anhaftende NaOH sowie überschüssiges Na₂CO₃ durch Waschen mit Wasser oder Ethanol abgetrennt. Das entstandene Zwischenprodukt besteht nahezu vollständig aus NaCa[HSiO₄], wie das Pulverdiffraktogramm zeigt.

Durch intensives Waschen mit Wasser kann ein Teil des Natriums in Na-Ca[HSiO₄] durch Wasserstoff ersetzt sein. Das entstehende Produkt besitzt dann die Zusammensetzung Na₍₁₋ₓ₎Ca[H₍₁₊ₓ₎SiO₄] mit x = [0, ..., 1]. Jeweils 30 g NaCa[HSiO₄] wurden mit zunehmenden Mengen an Wasser (300, 1000, 3000 bzw. 5000 ml) gewaschen. Der Austausch von Natrium gegen Wasserstoff zeigt sich in zunehmenden Unterschieden in den IR-Spektren. Es entsteht eine breite Bande bei ca. 1300 cm⁻¹, die zusätzliche OH-Gruppen, und zwar δ-OH(Si) an den Si-Tetraedern, belegen. Darüber hinaus ändern sich einige der Banden im Bereich von 750 bis 1000 cm⁻¹ (Si-O Streckschwingungen). Die beiden Banden bei 865 und 930 cm⁻¹, die ursprünglich etwa die gleiche Intensität aufweisen, gehen im Zuge des Waschens in eine starke Bande bei 942 cm⁻¹ über.

Im zweiten Schritt zur Herstellung des erfindungsgemäßen Bindemittels wurden verschiedene Vorprodukte der Zusammensetzung Na₍₁₋ₓ₎Ca[H₍₁₊ₓ₎SiO₄] mit x = [0, ..., 1] durch Mahlen in einer Scheibenschwingmühle für 120 Sekunden in ein erfindungsgemäßes einphasiges hydraulisches Bindemittel umgewandelt. Durch den Mahlvorgang findet eine partielle Entwässerung und Umstrukturierung der OH-Gruppen statt. Die Bande bei 1397 cm⁻¹ (δ-OH(Si)) verliert als Funktion der Mahldauer an Intensität. Das gleiche Schicksal trifft die breiten Banden bei 2435 cm⁻¹ und 2820 cm⁻¹ (Streckschwingungen von OH-Gruppen, die an H-Bindungen (ν₁ OH(O)) beteiligt sind. Die Banden werden kleiner, asymmetrischer und verschieben sich in Richtung zu höheren Wellenzahlen, was ein neues System von H-Bindungen belegt. Damit wird die Struktur des Vorprodukts zerstört. Das neu gebildete erfindungsgemäße hydraulische Bindemittel ist röntgenamorph und einphasig.

Das Bindemittel wurde durch Zugabe von Wasser (Massenverhältnis Wasser:Bindemittel = 1,0) zur Hydratation gebracht. In den ersten Sekunden nach dem Zudosieren von (Anmach-)Wasser wurde das Freisetzen von Benetzungswärme beobachtet. Nach einer Periode sehr geringer Nettowärmefreisetzung (sog. Ruheperiode) begann der eigentliche Hydratationsprozess bereits nach wenigen Minuten bis zu einigen Stunden, wobei das Maximum früher auftrat, als in den natriumarmen Beispielen. Bei einem Massenverhältnis Wasser zu Bindemittel von 0,3 und Zugabe von drei Teilen Sand zu einem Teil Bindemittel wurde nach 28 Tagen eine Druckfestigkeit von 20 N/mm² überschritten.

## Patentansprüche

1. Einphasiges hydraulisches Bindemittel, das Silizium-, Calcium-, Sauerstoff- und Wasserstoff-Atome in einer Anordnung enthält, die Silikat-Baueinheiten mit einem mittleren Vernetzungsgrad kleiner oder gleich Q^{1,5} und Silanol-Gruppen umfasst, wobei kein oder ein Teil der Calcium-Atome durch ein sechsfach oder höher mit Sauerstoff koordiniertes Atom M[6]^{x+}, welches ausgewählt ist aus Na-, K-, Li-, Mg-, Sr-, Ba-, Mn-, Fe [+II]- oder Al[+III]-Atomen und/oder kein oder ein Teil der Silizium-Atome durch ein tetraedrisch mit Sauerstoff koordiniertes Atom M[4]^{y+}, welches ausgewählt ist aus Al-, Ge-, B-, P-, Fe-, Be-, S- oder Ti-Atomen, ersetzt sind, das molare Verhältnis
[CaO + (x/2) · (M[6]^{x+}O_{x/2})]: [SiO₂ + M[4]^{y+}O_{y/2}]
einen Wert von 0,75 bis 2,75 aufweist und
das Bindemittel 3,5 Gew.% bis 20 Gew.% H₂O enthält.

2. Einphasiges hydraulisches Bindemittel nach Anspruch 1, wobei das molare Verhältnis
[CaO + (x/2) · (M[6]^{x+}O_{x/2})] : [SiO₂ + M[4]^{y+}O_{y/2}]
einen Wert von 1,0 bis 2,0 aufweist.

3. Einphasiges hydraulisches Bindemittel nach Anspruch 1 oder 2, das nach Zugabe von Wasser zu Hydraten reagiert, wobei mehr als 50 Gew.% der Hydrate Calcium-Silikat-Hydrate mit einem molaren Verhältnis
[CaO + (x/2) · (M[6]^{x+}O_{x/2})] : [SiO₂ + M[4]^{y+}O_{y/2}]
kleiner als 1,5 sind.

4. Gemisch, das ein einphasiges hydraulisches Bindemittel nach einem der Ansprüche 1 bis 3 enthält.

5. Gemisch nach Anspruch 4, das mindestens 10 Gew.% des einphasigen hydraulischen Bindemittels enthält.

6. Verfahren zur Herstellung eines einphasigen hydraulischen Bindemittels nach einem der Ansprüche 1 bis 3 mit den Schritten
(a) Bereitstellen einer Mischung aus festen Ausgangsstoffen, die Silizium-, Calcium-, Sauerstoff- und Wasserstoff-Atome enthält, und hydrothermales und/oder mechanochemisches Umwandeln dieser Mischung in ein Calcium-Hydroxo-Silikat, das Silanol-Gruppen umfasst,
(b) Mahlen des Calcium-Hydroxo-Silikats, bis sich das einphasige hydraulische Bindemittel bildet, und
(c) Trocknen des einphasigen hydraulischen Bindemittels auf einen H₂O-Gehalt von 3,5 Gew.% bis 20 Gew.%, solange der H₂O-Gehalt über 20 Gew.% liegt.

7. Verfahren zur Herstellung eines Gemisches nach Anspruch 4 oder 5 mit den Schritten
(a')Bereitstellen einer Mischung aus silikathaltigen Rohstoffen und calciumhaltigen Rohstoffen, die Silizium-, Calcium-, Sauerstoff- und Wasserstoff-Atome enthalten, und hydrothermales und/oder mechanochemisches Umwandeln dieser Mischung in ein Vorprodukt, das teilweise ein Calcium-Hydroxo-Silikat, das Silanol-Gruppen umfasst, enthält,
(b')Mahlen des Vorprodukts, bis sich aus dem Calcium-Hydroxo-Silikat das einphasige hydraulische Bindemittel bildet, und
(c')Trocknen des Gemischs, das das gebildete einphasigen hydraulischen Bindemittel enthält, auf einen H₂O-Gehalt des einphasigen hydraulischen Bindemittels von 3,5 Gew.% bis 20 Gew.%, solange dessen H₂O-Gehalt über 20 Gew.% liegt.

8. Verfahren nach Anspruch 7, wobei zur Durchführung von Schritt (a') Quarz, Silica, Glimmer, Feldspäte, Gläser oder Schlacken als silikathaltige Rohstoffe und CaO, CaCO₃ oder Ca(OH)₂ als calcium-haltige Rohstoffe oder Altbetone, die sowohl silikat- als auch calciumhaltige Rohstoffe enthalten, bereitgestellt werden.

9. Verfahren nach einem der Ansprüche 6 bis 8, wobei in Schritt (a) oder (a') ein Calcium-Hydroxo-Silikat mit monomeren Silikat-Baueinheiten, die Silanol-Gruppen aufweisen, erstellt wird.

10. Verfahren nach einem der Ansprüche 6 bis 9, wobei während Schritt (a) die festen Ausgangsstoffe oder während Schritt (a') die calciumhaltigen Rohstoffe und silikathaltigen Rohstoffe durch Reaktion mit Wasserdampf bei einer Temperatur von 140 °C bis 300 °C umgesetzt werden.

11. Verfahren nach einem der Ansprüche 6 bis 10, wobei während des Verfahrens soviel Lauge zugegeben wird, dass sich ein pH-Wert von 11 bis 13 einstellt.

12. Baustoff, hergestellt durch Abbinden des einphasigen hydraulischen Bindemittels nach einem der Ansprüche 1 bis 3 oder des Gemischs nach Anspruch 4 oder 5 mit Wasser und anschließendem Aushärten.

13. Baustoff nach Anspruch 12, der alkaliempfindliche Zusätze enthält.

## Claims

1. A monophase hydraulic binder containing silicon, calcium, oxygen and hydrogen atoms in an arrangement comprising silicate building units having an average connectedness of smaller than or equal to Q^{1.5} and silanol groups, with none or a part of the calcium atoms being substituted for by an atom M[6]^{x+} sixfold or higher coordinated with oxygen which is selected from Na, K, Li, Mg, Sr, Ba, Mn, Fe[+II] or Al[+III] atoms and/or none or a part of the silicon atoms being substituted for by an atom M[4]^{y+} tetrahedrally coordinated with oxygen which is selected from Al, Ge, B, P, Fe, Be, S or Ti atoms, the molar ratio of [CaO + (x/2) · (M[6]^{x+}O_{x/2})] : [SiO₂ + M[4]^{Y+}O_{y/2}] having a value of 0.75 to 2.75 and the binder containing 3.5% to 20% by weight of H₂O.

2. The monophase hydraulic binder of claim 1, the molar ratio of
[CaO + (x/2) · (M[6]^{x+}O_{x/2})] : [SiO₂ + M[4]^{y+}O_{y/2}]
having a value of 1.0 to 2.0.

3. The monophase hydraulic binder of claim 1 or 2 which reacts to hydrates after adding water, wherein more than 50% by weight of the hydrates are calcium silicate hydrates having a molar ratio of
[CaO + (x/2) · (M[6]^{x+}O_{x/2})] : [SiO₂ + M[4]^{y+}O_{y/2}]
of smaller than 1.5.

4. A mixture containing a monophase hydraulic binder of one of claims 1 to 3.

5. The mixture of claim 4, containing at least 10% by weight of the monophase hydraulic binder.

6. A method for manufacturing a monophase hydraulic binder of one of claims 1 to 3, comprising the steps of:
(a) Providing a mixture of solid starting materials containing silicon, calcium, oxygen and hydrogen atoms and hydrothermally and/or mechanochemically converting this mixture into a calcium hydroxosilicate comprising silanol groups,
(b) grinding the calcium hydroxosilicate until the monophase hydraulic binder forms, and
(c) drying the monophase hydraulic binder to an H₂O content of 3.5% by weight to 20% by weight as long as the H₂O content is above 20% by weight.

7. The method for manufacturing a mixture according to claim 4 or 5, comprising the steps of:
(a') Providing a mixture of silicate-containing raw materials and calcium-containing raw materials containing silicon, calcium, oxygen and hydrogen atoms and hydrothermally and/or mechanochemically converting this mixture into a preproduct which in part contains a calcium hydroxosilicate comprising silanol groups,
(b') grinding the preproduct until the monophase hydraulic binder forms from the calcium hydroxosilicate, and
(c') drying the mixture containing the formed monophase hydraulic binder to a content of H₂O of the monophase hydraulic binder of 3.5% by weight to 20% by weight as long as the H₂O content thereof is above 20% by weight.

8. The method of claim 7, wherein quartz, silica, mica, feldspars, glasses or slags as silicate-containing raw materials and CaO, CaCO₃ or Ca(OH)₂ as calcium-containing raw materials or old concretes containing silicate-containing as well as calcium-containing raw materials are provided for carrying out step (a').

9. The method of one of claims 6 to 8, wherein in step (a) or (a') a calcium hydroxosilicate with monomeric silicate building units having silanol groups is generated.

10. The method of one of claims 6 to 9, wherein during step (a) the solid starting materials or during step (a') the calcium-containing raw materials and the silicate-containing raw materials are reacted with water vapor at a temperature of 140°C. to 300°C.

11. The method of one of claims 6 to 10, wherein during the process so much lye is added that a pH value of 11 to 13 appears.

12. A building material, manufactured by setting the monophase hydraulic binder according to one of claims 1 to 3 or according to the mixture of claim 4 or 5 with water and subsequent hardening.

13. The building material of claim 12, containing alkali-sensitive additives.

## Revendications

1. Liant hydraulique monophasique, qui contient des atomes de silicium, de calcium, d'oxygène et d'hydrogène dans un agencement, qui comprend des unités constitutives de silicate présentant un degré de réticulation moyen inférieur ou égal à Q^{1,5} et des groupes silanol, aucun atome de calcium n'étant remplacé ou une partie des atomes de calcium étant remplacée par un atome M[6]^{x+}, hexacoordiné ou à coordination supérieure avec de l'oxygène, qui est choisi parmi les atomes de Na, de K, de Li, de Mg, de Sr, de Ba, de Mn, de Fe[+II] ou d'Al[+III], et/ou aucun atome de silicium n'étant remplacé ou une partie des atomes de silicium étant remplacée par un atome M[4]^{y+}, coordiné de manière tétraédrique avec de l'oxygène, qui est choisi parmi les atomes d'Al, de Ge, de B, de P, de Fe, de Be, de S ou de Ti, le rapport molaire
[CaO + (x/2) · (M[6]^{x+}O_{x/2})]: [SiO₂ + M[4]^{y+}O_{y/2}]
présentant une valeur de 0,75 à 2,75 et le liant contenant 3,5% en poids à 20% en poids de H₂O.

2. Liant hydraulique monophasique selon la revendication 1, dans lequel le rapport molaire
[CaO + (x/2) · (M[6]^{x+}O_{x/2})]: [SiO₂ + M[4]^{y+}O_{y/2}]
présente une valeur de 1,0 à 2,0.

3. Liant hydraulique monophasique selon la revendication 1 ou 2, qui réagit, après addition d'eau, en hydrates, plus de 50% en poids des hydrates étant des hydrates de calcium-silicate présentant un rapport molaire
[CaO + (x/2) · (M[6]^{x+}O_{x/2})] : [SiO₂ + M[4]^{y+}O_{y/2}]
inférieur à 1,5.

4. Mélange, qui contient un liant hydraulique monophasique selon l'une quelconque des revendications 1 à 3.

5. Mélange selon la revendication 4, qui contient au moins 10% en poids du liant hydraulique monophasique.

6. Procédé pour la préparation d'un liant hydraulique monophasique selon l'une quelconque des revendications 1 à 3, présentant les étapes consistant à
(a) préparer un mélange de substances de départ solides, qui contient des atomes de silicium, de calcium, d'oxygène et d'hydrogène, et convertir ce mélange de manière hydrothermique et/ou mécano-chimique en un calcium-hydroxo-silicate, qui comprend des groupes silanol,
(b) broyer le calcium-hydroxo-silicate jusqu'à la formation du liant hydraulique monophasique et
(c) sécher le liant hydraulique monophasique à une teneur en H₂O de 3,5% en poids à 20% en poids, tant que la teneur en H₂O est supérieure à 20% en poids.

7. Procédé pour la préparation d'un mélange selon la revendication 4 ou 5, présentant les étapes consistant à
(a') préparer un mélange de matières premières contenant du silicate et de matières premières contenant du calcium, qui contiennent des atomes de silicium, de calcium, d'oxygène et d'hydrogène, et convertir ce mélange de manière hydrothermique et/ou mécano-chimique en un précurseur, qui comprend en partie un calcium-hydroxo-silicate, qui comprend des groupes silanol,
(b') broyer le précurseur jusqu'à la formation du liant hydraulique monophasique à partir du calcium-hydroxo-silicate et
(c') sécher le mélange qui contient le liant hydraulique monophasique formé, à une teneur en H₂O du liant hydraulique monophasique de 3,5% en poids à 20% en poids, tant que sa teneur en H₂O est supérieure à 20% en poids.

8. Procédé selon la revendication 7, dans lequel du quartz, de la silice, du mica, des feldspaths, des verres ou des scories sont préparés en tant que matières premières contenant du silicate et dans lequel du CaO, du CaCO₃ ou du Ca(OH)₂ sont préparés en tant que matières premières contenant du calcium ou dans lequel des déchets de béton, qui contiennent des matières premières contenant tant du silicate que du calcium, sont préparés pour la réalisation de l'étape (a').

9. Procédé selon l'une quelconque des revendications 6 à 8, dans lequel un calcium-hydroxo-silicate présentant des unités constitutives monomères de silicate, qui présentent des groupes silanol, est formé dans l'étape (a) ou (a').

10. Procédé selon l'une quelconque des revendications 6 à 9, dans lequel les substances de départ solides sont transformées pendant l'étape (a) ou dans lequel les matières premières contenant du calcium et les matières premières contenant du silicate sont transformées pendant l'étape (a') par réaction avec de la vapeur d'eau à une température de 140°C à 300°C.

11. Procédé selon l'une quelconque des revendications 6 à 10, dans lequel une quantité de lessive telle qu'un pH de 11 à 13 s'établit est ajoutée pendant le procédé.

12. Matériau de construction, préparé par prise du liant hydraulique monophasique selon l'une quelconque des revendications 1 à 3 ou du mélange selon la revendication 4 ou 5 avec de l'eau et durcissement consécutif.

13. Matériau de construction selon la revendication 12, qui contient des additifs sensibles aux alcalis.
